# EUROPEAN PATENT APPLICATION

(11) **EP 1 978 631 A1**
(43) Date of publication of application: **08.10.2008**
(21) Application number: 07105755.8
(22) Date of filing: 05.04.2007
(51) Int. Cl.: H02P 6/08, H02P 6/18, H02P 6/14

(54) **Brushless 3-phase motor, electrical power tool and method of driving the brushless 3-phase motor**

(71) Applicant: Fem B.V., 8028 PM Zwolle (NL)
(72) Inventor: Woelders, Niels Jacob, 200081 Shanghai (CN)
(74) Representative: Viering, Jentschura & Partner

(57) **Abstract**

There is disclosed a brushless 3-phase motor (10), an electrical power tool applying this motor and a method of driving the brushless 3-phase motor. The brushless 3-phase motor (10) comprises a stator (4) with a plurality of permanent magnets and a rotor (1) with at least three coils (3) driving a shaft (6), a full 3-phase bridge (30), a voltage measuring means and a controller (20). The full 3-phase bridge (30) comprises six switching devices (31-36) and is connected to the brushless 3-phase motor (10) via a plurality of supply lines such as to supply at every time at least two of the coils (3) with either a first voltage or a second voltage such that at least two magnetic fields being generated, wherein directions of said two magnetic fields being opposed to each other. The voltage measuring means measures a back-EMF on at least one supply line to the motor (10). The controller is connected to the full 3-phase bridge (30) for switching the six switching devices (31-36) such that the coils (3) will be supplied with voltages on the basis of the measured back-EMF.

## Description

The invention is directed to a brushless 3-phase motor for an electrical power tool and a method of driving the brushless 3-phase motor.

The brushless Direct Current (DC) motor is one of the motor types rapidly gaining popularity. Brushless DC motors are used in industries such as automotive, aerospace, and industrial automation equipment. Compared to brushed DC motors and induction motors, brushless DC motors have many advantages and few disadvantages. Brushless motors require less maintenance, so they have a longer life time compared with brushed DC motors. Brushless motors produce more output power than brushed DC motors and induced motors. Because of the permanent magnets, the rotor inertia is less, compared with other types of motors. This improves acceleration and deceleration characteristics. Their linear speed/torque characteristics produce predictable speed regulation. With brushless motors, brush inspection is eliminated. Furthermore, brushless DC motors operate much more quietly than brushed DC motors. Low-Voltage models are ideal for battery operation and portable equipment. In view of these advantages, the use of brushless DC motors for electric power tools in the field of home appliance, such as power drills or cordless screwdrivers, becomes more important.

An example of such an application is shown in the US patent application US 2001/0033742 A1, disclosing a brushless direct current (DC) motor, which is applied in an electrical power tool. The brushless DC motor comprises a stator comprised of magnetic material and a rotor having three coils wound about it. The motor is controlled by applying an electrical voltage to each coil of the motor according to the position of the rotor. The position of the rotor is detected by hall sensors mounted on a shaft of the rotor and by magnets mounted in proximity of the hall sensors at the enclosure of the motor. Therefore, the precision of determining the position of the rotor and thus the effectiveness of the motor is determined by the precision of the positions of the hall sensors on the shaft.

Therefore, it is an object of the invention to provide a solution for a motor for an electrical power tool, which enables to detect the position of the rotor precisely such that the motor can be driven with a high efficiency.

This problem will be solved by a brushless 3-phase motor for a power tool with the features according to the independent claim.

According to the invention, a brushless 3-phase motor is provided, comprising a stator with at least three coils and a rotor with a plurality of permanent magnets driving a shaft, a full 3-phase bridge comprising six switching devices and being connected to said brushless 3-phase motor via a plurality of supply lines such as to supply at every time at least two of said coils with either a first voltage level or a second voltage level such that at least two magnetic fields are generated, wherein directions of said two magnetic fields being opposed to each other, a voltage measuring means for measuring a back-EMF on at least one supply line to said motor, and a controller connected to said full 3-phase bridge for switching said six switching devices such that said coils will be supplied with voltages on the basis of said measured back-EMF (EMF = electromagnetic field).

The main advantage of the invention is to provide a brushless DC motor but with a 3-phase bridge comprising switching devices to detect and determine the position of the rotor and control the motor instead of using sensors. This provides the possibility to produce cheaper motors because no sensors and accordingly less cabling or wiring is required.

The brushless 3-phase for a power tool according to the present invention has the advantage, that the efficiency of the brushless 3-phase is higher than the efficiency of a DC motor with brushes. A further advantage of the brushless 3-phase motor according to the present invention is that the brushless 3-phase motor has a higher torque. Furthermore, for a predetermined power, a brushless 3-phase according to the present invention can be manufactured smaller than a conventional motor. It also can rotate with a higher speed measured as revolutions per minute (RPM).

When applied to an electrical power tool, the brushless 3-phase has the advantage of causing less noise since there are no carbon brushes. Furthermore, the brushless 3-phase according to the present invention has the advantage of having a high efficiency such that the application time of the battery pack will be expanded as well as being able to rotate at very high speed of up to 160.000 rpm. This is due to the fact that the motor will follow the switching of the controller. Thus, the speed of the motor depends on the switching speed of the controller and on the construction of the motor. In view of this, the supply voltage has to be high enough such that a fast change is possible.

An additional embodiment comprising the brushless 3-phase motor according to the present invention, wherein said controller further comprising a timing control circuit receiving said back-EMF and generating a timing control signal, and a PWM generator outputting switching signals to said switching devices on the basis of said timing control signal.

The timing control circuit is adapted to determine the actual position of the rotor, i.e. of the shaft, from the measured voltages. Therefore, the position of the rotor can be determined without the use of a hall sensor.

In an another embodiment of the brushless 3-phase motor according to the present invention, in said full 3-phase bridge a first terminal of a first, third and fifth switching device is connected to said first voltage, each second terminal of said first, third and fifth switching devices being connected to one first terminal of a second, fourth and sixth switching device, respectively, and to a first, a second and a third supply line to said motor, respectively, and each second terminal of said second, fourth and sixth switching device being connected to said second voltage.

In still another embodiment of the brushless 3-phase motor according to present invention, a sum of said back-EMF at said supply lines is measured by said voltage measuring means.

In another embodiment of the brushless 3-phase motor according to the present invention, said controller is adapted to switch on one coil and to switch off another coil at a predetermined angle after said measured sum of back-EMF is 0 V.

In another embodiment of the brushless 3-phase motor according the present invention, said predetermined angle is 30° minus a lead angle.

In another embodiment of present invention, the brushless 3-phase motor is further connected to a battery pack supplying said first voltage level and said second voltage level to said 3-phase bridge and said controller.

The battery pack is preferably rechargeable by an appropriate recharger device. Furthermore, the battery pack is constituted of a plurality of cells, coupled together in a combination of serial and parallel connection such that an appropriate voltage can be supplied and a sufficient amount of electrical energy can be stored by the battery pack.

In another embodiment of the brushless 3-phase motor according to the present invention, said switching devices are field effect transistors, bipolar transistors or insulated gate bipolar transistors.

In another embodiment of the brushless 3-phase motor according the present invention, said first voltage level is a positive supply voltage and said second voltage level is ground voltage.

In another embodiment of the brushless 3-phase motor according to the present invention, said motor having a multiple of three coils.

In another embodiment of the brushless 3-phase motor according the present invention, said coils being connected in star connection or delta connection.

In still another embodiment of the brushless 3-phase motor according the present invention, the controller is adapted to set a lead angle and/or overlap commutation can be applied.

In another embodiment of the brushless 3-phase motor according to the present invention, overlap commutation can be applied.

By applying overlap commutation, the motor can produce more power.

Furthermore, the above mentioned object will be solved by an electrical power tool having a brushless 3-phase motor according to claims 1 - 13, and a tool attached to a shaft of said motor.

Moreover, the above mentioned object will be solved by a method of driving a brushless 3-phase motor, wherein a back-EMF of each power line of said motor is repeatedly measured, a position of a rotor of said motor is determined from the measured back-EMFs, and a first voltage and a second voltage are respectively supplied to two of a plurality of coils of said motor such that said first voltage exerts a pull force to said rotor and said second voltage exerts a push force to said rotor.

In another embodiment of the method, said position of said rotor is determined from a transition of a measured back-EMF from positive to negative polarity or from negative to positive polarity.

In still another embodiment of the method, said position of said rotor is determined taking into account a predetermined angle.

In another embodiment of the method, said position of said rotor is determined taking into account a lead angle.

In another embodiment of the method, said lead angle is controlled.

In still another embodiment of the method, a sum of said back-EMFs of said power lines is measured.

In another embodiment of the method, a polarity of said first voltage is opposite to a polarity of said second voltage.

Embodiments of the invention are illustrated in the figures and will be further explained.
FIG. 1 shows a cross section of a brushless 3-phase motor;
FIG. 2 shows a schematic view of a cordless angle grinder using a brushless 3-phase motor according to an embodiment of the present invention;
FIG. 3 shows a circuit diagram according to an embodiment of the present invention;
FIG. 4 is a diagram showing voltages of the brushless 3-phase motor in normal commutation;
FIG. 5 is a diagram showing voltages of the brushless 3-phase motor in overlap commutation; and
FIG. 6 shows a controller of the brushless 3-phase motor of the present invention.

Embodiments of the present invention are shown in the figures for explanatory and exemplary purposes only. However, many features of actual brushless 3-phase motors are not shown in the figures such as to render this description as simple as possible. Particularly, the figures are not to scale. The same elements of the embodiment of the present invention will have the same reference signs throughout the description where possible.

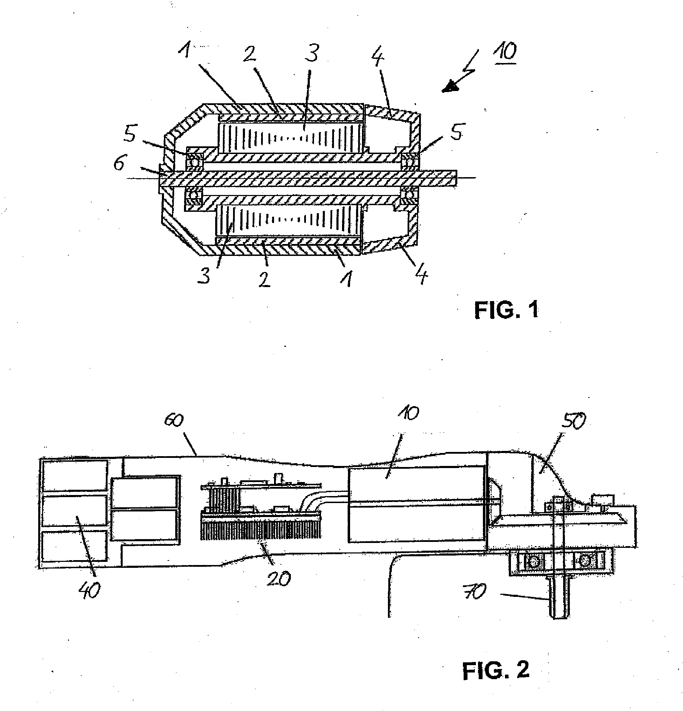

FIG. 1 shows a cross section of an alternating current motor.

The motor 10 comprises a housing 4 being a stator fixed to a power tool with a plurality of coils 3. Further, the motor 10 comprises a rotor 1 having permanent magnets 2 which are both fixed on a rotatably mounted shaft 6. Three coils 3 are mounted on the stator 4 each coil 3 being shifted by 120°. To the rotor 1 at least one pair of permanent magnets 2 having opposed polarity to each other is fixed such that by appropriately applying a voltage to the coils 3, dependent on the polarity of the voltage and the polarity of the permanent magnets 2 an electromagnetically attractive or repulsive force occurs between each permanent magnet 2 and neighbouring coils 3. Thus, the shaft 6 will rotate. Further, a fixing device (not shown) is coupled to the shaft 6 for attaching e.g. a drill or a grinding disc. The shaft 6 is coupled with the housing 4 of the motor 10 by appropriate bearings 5.

The motor 10 is a brushless 3-phase motor having a plurality of pairs of permanent magnets 2 and three or a multiple of three coils 3. The coils 3 can be electrically coupled in star connection or delta connection.

Alternatively, the permanent magnets 2 can be coupled to the housing 4 and the coils 3 can be coupled to the rotor 1.

FIG. 2 shows a cordless angle grinder using a brushless motor according to an embodiment of the present invention.

As shown in FIG. 2, the cordless angle grinder comprises a gear box 50, a brushless 3-phase motor 10, a controller 20, a battery pack 40 enclosed in an enclosure 60 and a shaft 70. The brushless 3-phase motor 10 is driving the shaft 70 using the gear box 50, wherein a grinder disc can be attached to the shaft 70. The motor 10 is driven by a controller 20 which is driven by a direct voltage supplied by the battery pack 40.

The battery pack 40 is preferably rechargeable by an appropriate recharger device. The battery pack 40 is constituted of a plurality of cells, coupled together in a combination of serial and parallel connection such that an appropriate voltage can be supplied and a sufficient amount of electrical energy can be stored by the battery pack 40. The battery pack 40 is electrical connected to the controller 20 for supplying direct voltage to the controller 20.

As will be further described, the controller 20 applies either a positive supply voltage or a ground voltage (GND) to the motor 10 such that an electrical voltage is applied to the coils of the motor 10. Therefore a specific pattern of voltages will be applied to the coils depending on the position of the rotor with reference to the permanent magnets of the stator. Applying a voltage to a coil causes a magnetic field which direction depends on the polarity of the applied voltage. In other words, and as will be explained later in more detail, magnetic fields are formed by the coils of the motor 10 such that one coil is attracted by a neighbouring permanent magnet on the stator, while at the same time another coil of the motor 10 will be repulsed by the permanent magnet. Thus, the motor 10 will be driven in a push-pull-configuration, having a high power. At the same time, moving coils in the magnetic fields of the permanent magnets generate a current on the supply lines of the coils. Thus a voltage can be measured at the supply lines which will be indicative of the actual angle position of the rotor.

Therefore, the motor 10 transforms the supplied electrical energy into a rotational movement of the shaft such that e.g. a grinding disk is driven. As shown in FIG. 2, the rotating shaft of the motor 10 drives a second shaft 70 which is arranged perpendicular to the first shaft using a gear box 50. Preferably, the speed of the second shaft 70 can be also adjusted by the gear box 50. Therefore, the speed of the second shaft 70 can be higher or lower by a predetermined multiple.

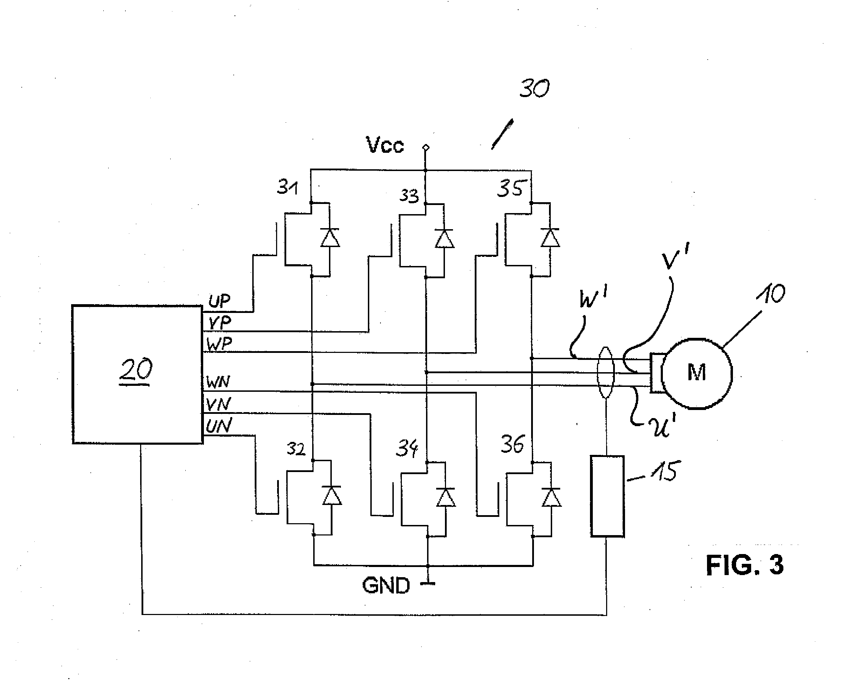

FIG. 3 shows a circuit diagram according to an embodiment of the present invention.

As shown in FIG. 3, the circuit for driving the motor 10 according to the invention comprises six field effect transistors (FET) 31, 32, 33, 34, 35 and 36, connected to the controller 20 and to the motor 10. Alternatively, six transistors, six IGBTs (Insulated Gate Bipolar Transistors) or other comparable switching components can be used.

Drain connectors of FETs 31, 33 and 35 are each connected to a supply voltage VCC, preferably supplied by the battery pack 40 of the power tool. The source connectors of the FETs 31, 33 and 35 are connected to drain connectors of the FETs 32, 34 and 36, respectively. Further, the source connectors of the FETs 31, 33 and 35 are also connected to connectors of the motor U', V' and W',respectively. Source connectors of FETs 32, 34 and 36 are each connected to ground voltage GND. Thus, a full 3-phase bridge is formed.

In other words, the source connector of the FET 31 is connected to a connector U' of the motor 10, the source connector of the FET 33 is connected to a connector V' of the motor 10, and the source connector of the FET 35 is connected to a connector W' of the motor 10.

The connectors U', V' and W' of the motor 10 are connected to the coils of the motor 10, wherein the coils of the motor 10 are connected either in star connection or in delta connection.

The gate connector of the FET 31 is connected to a terminal UP of the controller 20. The gate connector of the FET 32 is connected to a terminal UN of the controller 20. The gate connector of the FET 33 is connected to a terminal VP of the controller 20. The gate connector of the FET 34 is connected to a terminal VN of the controller 20. The gate connector of the FET 35 is connected to a terminal WP of the controller 20. The gate connector of the FET 36 is connected to a terminal WN of the controller 20. (There can be more electronics between the gate and the controller, e.g. change of voltage for the highside or other FET or transistor to switch the main switching current on the gate of the main FET).

A voltage measuring means 15 is connected to the power lines of the motor 10 such as to measure a back-EMF at this power lines. Preferably, a sum of the back-EMF is measured by the voltage measuring means 15. The voltage measuring means 15 is further connected to the controller 20 for outputting the measured voltage to the controller 20.

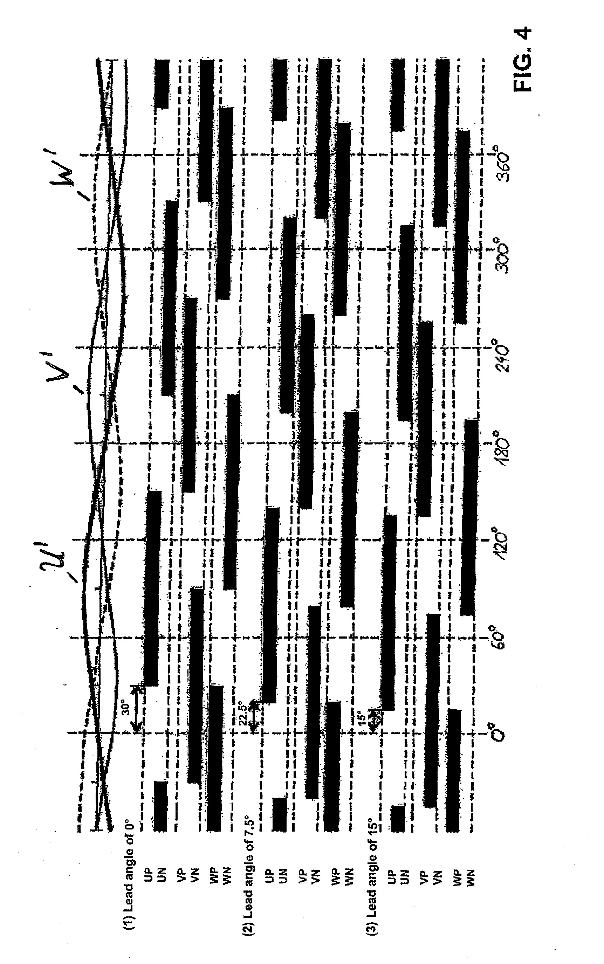

FIG. 4 represents a diagram showing voltages of the brushless 3-phase motor 10.

The upper part of FIG. 4 shows voltages of the three power lines of the brushless 3-phase motor 10. These voltages are measured and serve as a back-EMF for controlling the rectifier circuit with the controller.

The abscissa of FIG. 4 shows an angle of about 0°-360° only, since the graphs and depictions will repeat every 360°. This angle corresponds to an angle position of the rotor 1. In the upper part of FIG. 4, back-EMF is shown in the form of three sinusoidal waves corresponding to terminals U', V' and W' of the motor 10, respectively. The PWM (puls width modulation) signal used to control the FETs is shown as black bars.

FIG. 4 shows, how the FETs will be controlled dependent on the measured back-EMF, corresponding to the angle position of the rotor 1. These phases are shown for three different leading angles (0°, 7,5° und 15°), respectively. By controlling the leading angle, the efficiency of the motor 10 can be increased with different torques.

As can be seen from FIG. 4, the beginning of the positive half-wave of the voltage of terminal U' corresponds to an angle position of 0° of the motor 10. This voltage is generated by the movement of the rotor 1 and of the coils 3 in the magnetic field of the stator 4 and will be measured by a voltage measuring device. A transit of the voltage of terminal U' from positive to negative, corresponding to the beginning of the negative voltage half-wave, corresponds to an angle position of 180° of the motor 10. Since the voltage of terminal V' is delayed by 120° with respect to the voltage of terminal U', respective transits of voltage from negative to positive voltages and from positive to negative voltages correspond to 120° and 300°, respectively. Since the voltage of terminal W' is delayed by 120° with respect to the voltage of terminal V', respective transits of voltage from negative to positive voltage and from positive to negative voltage correspond to 240° and 60°, respectively.

Preferably, the back EMF can be amplified by an Operational Amplifier (OpAmp) or an other amplified circuit and the sum of the back-EMF will be monitored by the controller 20, wherein switching of the FET takes places 30° after the sum of the back-EMF is 0 V. Then, one coil is switched off, while another coil is switched on.

At first, controlling of the FET will be described for a lead angle of 0°. In this case output UP will be set to HIGH at an angle of 30° and will be set to LOW at an angle of 150°, therefore supplying terminal U' with a positive voltage in a range of 30°-150°. Output UN will be set to HIGH at an angle of 210° and will be set to LOW at an angle of 330°, thus, supplying terminal U' with a negative voltage in a range of 210°-330°.

Output VP will be set to HIGH at an angle of 150° and will be set to LOW at an angle of 270°. Output VN will be set to HIGH at an angle of 330° and will be set to LOW at an angle of 90°. Output WP will be set to HIGH at an angle of 270° and will be set to LOW at an angle of 30°. Output WN will be set to HIGH at an angle of 90° and will be set to LOW at an angle of 210°. Thus, terminals V' and W' will be supplied with positive and negative voltages based on measured back-EMF.

In this way, e.g. at an angle of the rotor 1 of 0°, terminal U' is not supplied with voltage, terminal V' is supplied with negative voltage, and terminal W' is supplied with positive voltage. Correspondingly, at each time one coil 3 is supplied with a positive voltage, a second coil 3 is supplied with negative voltage and the third coil 3 is not supplied with voltage. Therefore, with a neighbouring magnet of the stator 4, one coil exerts a pulling force while a second coil exerts a pushing force to this magnet, thus turning the rotor 1 until one of the FET will be turned off and another FET will be turned on as shown in FIG. 4. As can be also seen from FIG. 4, switching turns place every 60°.

In the case of a lead angle of 7.5°, the method of controlling the FETs will be similar to the method explained above. Therefore, the above description will not be repeated. However, in contrast to the above-mentioned method, switching of each FET takes places earlier by 7.5°, as can be seen from FIG. 4. In other words, FETs are turned on/off by 7.5° earlier.

Also in the case of a lead angle of 15°, switching of each FET takes places earlier by 15° when compared to a lead angle of 0°, which case is described above.

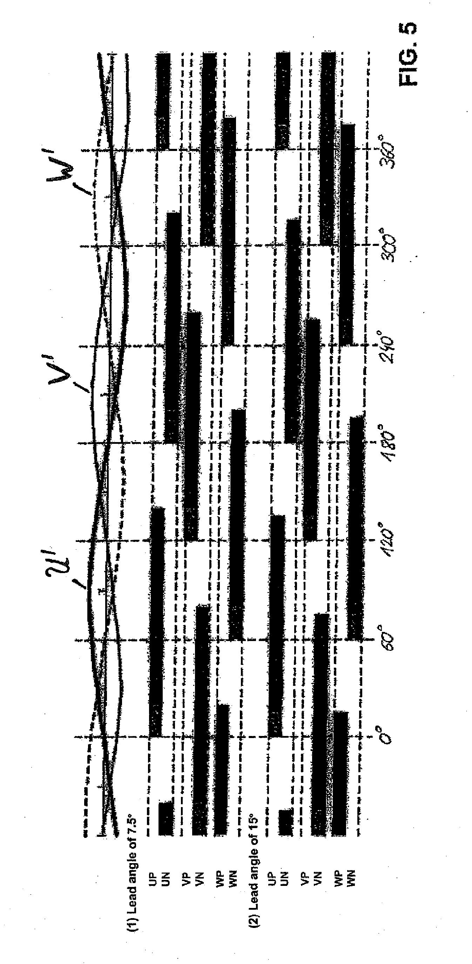

FIG. 5 represents a diagram on how power will be supplied to the brushless 3-phase motor 10 in overlap commutation. By applying overlap commutation, the motor 10 can produce more power.

At first overlap commutation with a lead angle of 7.5° will be described. In this case, angle positions for turning the respective FETs off will remain the same as in the case of the same lead angle but without overlap commutation, as shown in FIG. 4. However, in this case turning on of the FETs will be take place at an angle position of 22.5° earlier than with respect to the case of a lead angle of 7.5° without overlap commutation.

In more detail, output UP will be set to HIGH at an angle of 0° and will be set to LOW at an angle of 142.5°. Output UN will be set to HIGH at an angle of 180° and will be set to LOW at an angle of 322.5°. Output VP will be set to HIGH at an angle of 120° and will be set to LOW at an angle of 262.5°. Output VN will be set to HIGH at an angle of 300° and will be set to LOW at an angle of 82.5°. Output WP will be set to HIGH at an angle of 240° and will be set to LOW at an angle of 22.5°. Output WN will be set to HIGH at an angle of 60° and will be set to LOW at an angle of 202.5°.

In the case of a lead angle of 15°, angle positions for turning the respective FETs off will remain the same as in the case of the same lead angle but without overlap commutation, as shown in FIG. 4. However, in this case turning on of the FETs will be take place at an angle position of 15° earlier than without overlap commutation.

As can be seen from FIG. 5, each coil 3 will be turned on while another coil 3 is also still turned on. This is in contrast to the case depicted in FIG. 4, wherein at the same time one coil 3 is turned on and another coil 3 is turned off such that no overlap occurs.

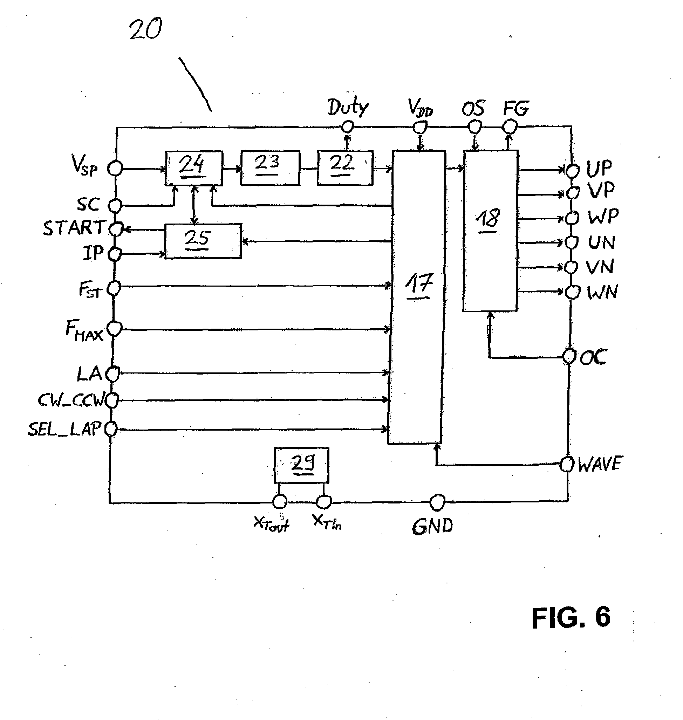

FIG. 6 shows a schematic diagram of a controller 20 of the brushless 3-phase motor 10 of the present invention.

According to one embodiment of the present invention, the controller 20 comprises a PWM (pulse width modulation) generator 18, a timing control circuit 17, a 6-bit AD converter 23, a DC excitation control circuit 25 and a startup time setting circuit 24.

The timing control circuit 17 is connected to at least one voltage measuring means (not shown) by a terminal WAVE and receives voltage signals, which have been measured be the at least one voltage measuring means at the terminals of the motor 10 or at the power lines of the motor 10. The timing control circuit 17 is adapted to determine the actual position of the rotor 1, i.e. of the shaft 6, from the measured voltages. Therefore, the position of the rotor 1 can be determined without the use of a hall sensor.

The timing control circuit 17 is also adapted to receive a signal selecting normal commutation or overlap commutation by the terminal SEL_LAP. According to this signal the motor 10 will be driven with either normal commutation or overlap commutation. By applying overlap commutation, the motor 10 can produce more power.

Further, the timing control circuit 17 is adapted to receive a signal for selecting the rotation direction of the motor 10 by the terminal CW_CCW. According to this signal the motor 10 will be driven such as to turn either clockwise or counter clockwise. The timing control circuit 17 also receives a lead angle signal by the terminal LA, wherein a lead angle is determined by this signal. Preferably, the rotation direction signal can be input by a user, while the lead angle signal is set to a predetermined value. Alternatively, the lead angle signal can be determined by the timing control circuit 17.

The timing control circuit 17 receives also a signal indicating the maximum commutation frequency and a signal determining a forced commutation frequency setting by the terminals F_{MAX} and F_{ST}, respectively. The forced commutation frequency is applied in the case of starting the motor 10, when there is still no voltage signal received, such that no precise position recognition of the motor 10 is possible.

The PWM generator 18 is adapted to generate pulse width modulated signals as illustrated in FIGs. 4 and 5, and receives corresponding control signals from the timing control circuit 17. The PWM generator 18 is also connected to at least one current measuring unit (not shown) over a terminal OC, such that the current flowing in at least one power line of the motor 10 can be detected by the PWM generator 18. Preferebly, this measured current is compared to a predetermined threshold current such that the motor 10 will not be damaged. The PWM generator 18 outputs six control signals to the six FETs of the driver circuit on the basis of the inputs of the timing control circuit and the current measuring unit over terminals UP, VP, WP, UN, VN and WN. Each of these control signals is applied to the basis of a respective one of the FETs of the driver circuit. Further, the PWM generator 18 may comprise an output terminal FG for outputting directly a signal signifying engine speed.

The PWM control circuit 22 is connected to an output of the 6-bit AD converter 23 and to the input of the timing control circuit 17 and receives a digital output signal of the 6-bit AD converter 23. Signals for controlling the PWM generator 18 are output to the timing control circuit 17. Additionally, the PWM control circuit 22 can comprise a terminal Duty for outputting a duty signal of the PWM generator 18.

The 6-bit AD converter 23 is connected with an output of the startup time setting circuit 24 und with an input of the PWM control circuit 22 and converts the output value of the startup time setting circuit 24 into a digital value, which will be subsequently output to the PWM controller circuit 22.

The startup time setting circuit 24 is connected to the 6-bit AD converter 23, the timing control circuit 17, the DC excitation control circuit 25 and to terminals V_{SP} and SC. A signal for determining the speed of the motor is input by the terminal VSP. A signal for selecting the startup commutation time and duty cycle ramp-up time is input at terminal SC. Additionally, the startup time setting circuit 24 receives a feedback signal from the timing control circuit 17 to regulate the startup process and exchanges information about the excitation with the DC excitation control circuit 25.

The DC excitation control circuit 25 is connected to the timing control circuit 17, the startup time setting circuit 24 and terminals START and IP. It receives signals from the timing control circuit 17 and a start signal at the terminal IP. Further, the DC excitation control circuit 25 transmits a start confirmation signal showing the start process to the terminal START.

When starting the motor 10, since the motor 10 is still stationary, there will be no back-EMF and the motor position can not be known. In this case, the motor 10 is aligned to a known position in DC excitation mode and the rotation is started in forced commutation mode subsequently, which time can be selected. The alignment process of the rotor to a known position will be stopped, as the voltage at the terminal IP will reach half of V_{DD} (0.5*V_{DD}). As soon as a back-EMF can be detected by the controller 20, which is sufficient to calculate the position of the rotor 1, the controlling of the motor 10 is switched to sensor-less mode.

Additionally, the controller 20 comprises a clock generation circuit 29 for supplying a clock to the controller 20 and to terminals X_{Tout} and X_{Tin}. Preferable, the clock generation circuit 29 comprises an oscillating crystal.

The terminals V_{DD} and GND of the controller 20 serve to supply a supply voltage. These terminals are connected to respective connectors of the battery pack.

Preferably, the controller 20 is connected to an operating unit, by which a user can turn on and turn off the motor 10 and select different operating modes of the motor 10. However, this operating unit is not displayed in the figures. For example, the user can choose a rotation direction of the shaft, i.e. clockwise or counter clockwise, and the speed of the engine. The operation unit preferably also comprises a display device such that set operation modes can be viewed by the user.

Additionally, the brushless 3-phase motor 10 for a power tool according to the present invention has the following advantages: The efficiency of the brushless 3-phase is higher than the efficiency of a DC motor with brushes. Further, the brushless 3-phase motor according to the invention has a higher torque. Furthermore, for a predetermined power, a brushless 3-phase according to the invention can be manufactured smaller than a conventional motor and can rotate with higher RPM.

When applied to a power tool, the brushless 3-phase has the advantages of causing less noise since there are no carbon brushes, having a high efficiency such that the application time of the battery pack will be expanded as well as being able to rotate at very high speed of up to 160.000 rpm. This is due to the fact that the motor will follow the switching of the controller. Thus, the speed of the motor depends on the switching speed of the controller and on the construction of the motor. In view of this, the supply voltage has to be high enough such that a fast change is possible.

Instead of the use 6-bit AD converter 23 also other types of converter may be used.

## Claims

1. A brushless 3-phase motor comprising:
a stator (4) with at least three coils (3) and a rotor (1) with a plurality of permanent magnets (2) driving a shaft (6);
a full 3-phase bridge (30) comprising six switching devices (31-36) and being connected to said brushless 3-phase motor (10) via a plurality of supply lines such as to supply at every time at least two of said coils with either a first voltage level or a second voltage level such that at least two magnetic fields are generated, wherein directions of said two magnetic fields being opposed to each other;
a voltage measuring means (15) for measuring a back-EMF on at least one supply line to said motor (10); and
a controller (20) connected to said full 3-phase bridge (30) for switching said six switching devices (31-36) such that said coils will be supplied with voltages on the basis of said measured back-EMF.

2. The brushless 3-phase motor according to claim 1, wherein said controller (20) further comprising:
a timing control circuit (17) receiving said back-EMF and generating a timing control signal; and
a PWM generator (18) outputting switching signals to said switching devices (31-36) on the basis of said timing control signal.

3. The brushless 3-phase motor according to claim 1 or 2, wherein in said full 3-phase bridge (30)
a first terminal of a first, third and fifth switching device (31, 33, 35) is connected to said first voltage;
each second terminal of said first, third and fifth switching devices (31, 33, 35) being connected to one first terminal of a second, fourth and sixth switching device (32, 34, 36), respectively, and to a first, a second and a third supply line to said motor (10), respectively; and
each second terminal of said second, fourth and sixth switching device (32, 34, 36) being connected to said second voltage.

4. The brushless 3-phase motor according to one of the claims 1 to 3, wherein a sum of said back-EMF at said supply lines is measured by said voltage measuring means (15).

5. The brushless 3-phase motor according to one of the claims 1 to 4, wherein said controller (20) is adapted to switch on one coil and to switch off another coil at a predetermined angle after said measured sum of back-EMF is 0 V.

6. The brushless 3-phase motor according to claim 5, wherein said predetermined angle is 30° minus a lead angle.

7. The brushless 3-phase motor according to one of the claims 1 to 6 , further connected to a battery pack (40) supplying said first voltage level and said second voltage level to said 3-phase bridge (30) and said controller (20).

8. The brushless 3-phase motor according to one of the claims 1 to 7, wherein said switching devices (31-36) are field effect transistors, bipolar transistors or insulated gate bipolar transistors.

9. The brushless 3-phase motor according to one of the claims 1 to 8, wherein said first voltage level is a positive supply voltage and said second voltage level is ground voltage.

10. The brushless 3-phase motor according to one of the claims 1 to 9, said motor (10) having a multiple of three coils (3).

11. The brushless 3-phase motor according to one of the claims 1 to 10, said coils (3) being connected in star connection or delta connection.

12. The brushless 3-phase motor according to one of the claims 1 to 11, wherein the controller (20) is adapted to set a lead angle and/or overlap commutation can be applied.

13. The brushless 3-phase motor according to one of the claims 1 to 12, wherein overlap commutation can be applied.

14. An electrical power tool, having:
a brushless 3-phase motor (10) according to one of the claims 1 to 13 ; and
a tool attached to a shaft (6, 70) of said motor (10).

15. A method of driving a brushless 3-phase motor, wherein a back-EMF of each power line of said motor is repeatedly measured, a position of a rotor of said motor is determined from the measured back-EMFs, and a first voltage and a second voltage are respectively supplied to two of a plurality of coils of said motor such that said first voltage exerts a pull force to said rotor and said second voltage exerts a push force to said rotor.

16. The method according to claim 15, wherein said position of said rotor is determined from a transition of a measured back-EMF from positive to negative polarity or from negative to positive polarity.

17. The method according to claim 16, wherein said position of said rotor is determined taking into account a predetermined angle.

18. The method according to claim 17, wherein said position of said rotor is determined taking into account a lead angle.

19. The method according to claim 18, wherein said lead angle is controlled.

20. The method according to one of claims 15 to 19, wherein a sum of said back-EMFs of said power lines is measured.

21. The method according to one of claims 15 to 20, wherein a polarity of said first voltage is opposite to a polarity of said second voltage.
